# EUROPÄISCHE PATENTSCHRIFT

(11) **EP 0 855 816 B1**
(45) Veröffentlichungstag und Bekanntmachung des Hinweises auf die Patenterteilung: **10.12.2003**
(21) Anmeldenummer: 97121893.8
(22) Anmeldetag: 12.12.1997
(51) Int. Cl.: H04L 12/28, H01R 9/24, H02G 3/16

(54) **Busankoppler für Anwendungsmodule der Gebäudesystemtechnik**
Bus interface for application modules of home-system technique
Interface de bus pour les modules d'application de la technique de systèmes domotiques

(30) Priorität: 23.01.1997 DE 19702319
(43) Veröffentlichungstag der Anmeldung: 29.07.1998
(73) Patentinhaber: Insta Elektro GmbH, 58511 Lüdenscheid (DE); Phoenix Contact GmbH & Co. KG, 32825 Blomberg (DE)
(72) Erfinder: Neumann, Udo, Dipl.-Ing., 58579 Schalksmühle (DE); Donat, Norbert, Dipl.-Ing., 58553 Halver (DE); Gräf, Karsten, Dipl.-Ing., 57413 Finnentrop-Heggen (DE); Hilleke, Dieter, Dipl.-Ing., 57413 Finnentrop (DE); Jasperneite, Jürgen, 32839 Steinheim (DE)

(56) Entgegenhaltungen:
- EP-A- 0 772 132
- DE-A- 4 341 099
- DE-A- 4 423 839
- RUETIMANN P: "MIT BUSSYSTEMEN GEGEN DEN LEITUNGSWIRRWARR PRAKTISCHE ASPEKTE ZUM EINSATZ DES EIB-BUSSES IN NIEDERSPANNUNGSINSTALLATIONEN" BULLETIN SEV/VSE,CH,SCHWEIZERISCHER ELEKTROTECHNISCHER VEREIN, ZURICH, Bd. 87, Nr. 7, 29. März 1996 (1996-03-29), Seiten 43-49, XP000615044 ISSN: 0036-1321
- WERNER B: "DER KLEINE BRUDER DES INTERBUS-S DIE INTEGRATION DES SENSOR-LOOP" ELEKTRONIK,DE,FRANZIS VERLAG GMBH. MUNCHEN, Bd. 44, Nr. 1, 10. Januar 1995 (1995-01-10), Seiten 44-46, XP000492754 ISSN: 0013-5658

## Beschreibung

Die vorliegende Erfindung geht vom einem gemäß dem Oberbegriff des Hauptanspruches konzipierten Busankoppler aus.

In der Automatisierungsindustrie und in der Gebäudeleittechnik werden heute sogenannte Feldbussysteme eingesetzt. Der Anwendungsbereich für Feldbussysteme stellt vorrangig die Sensor/Aktorebene dar, in der die Steuerung von Produktionsprozessen abgewickelt wird. Hier werden Daten wie Druck, Temperatur, Durchfluß, Endschalterabfragen usw. gelesen und verarbeitet. Diese Daten werden in der Regel von Steuerungsrechnem weiterverarbeitet. Ein weitverbreiteter Feldbus ist der INTERBUS S in dem ein Busmaster die Steuerung und den Buszugriff übernimmt. Er wird nicht nur zur Automatisierung von Produktionsprozessen, sondern auch zur Steuerung von Gebäudeeinrichtungen benutzt. Als Gebäudeeinrichtungen seien beispielhaft Heizungen, Lüftungen, Klimasteuerungen oder Lichtsteuerungen genannt. Die Bedienung der Busteilnehmer erfolgt hierbei meistens mit Ein- und Ausgabemodulen, die in Verteilerschränken untergebracht werden und mit Tasten- oder Schalterfeldem bedient werden. Diese Schaltfelder unterscheiden sich dann wesentlich von den Installationsmaterialien der Gebäudesystemtechnik, die im gleichen Raum benutzt werden. Steckdosen des 230-V Netzes, Telekommunikationssteckdosen für Telefone und Datennetze, Lichtschalter usw. zählen zu diesen Installationsmaterialien der Gebäudesystemtechnik und sie werden in verschiedenen Farben und Formen angeboten. Bedienelemente für Feldbussysteme sind jedoch nicht in diesen Farben und Formen erhältlich.

In der Gebäudesystemtechnik, dem European Installationbus (EIB), werden Bedienelemente eingesetzt, die auf einen Unterputz-Busankoppler aufsteckbar sind. Diese werden dort als Anwendungsmodule bezeichnet. Diese Gebäudesystemtechnik stellt ein dezentrales System dar, in dem die Steuerung und der Buszugriff in jeden Busankoppler integriert ist. Die Bedienelemente sind so entwickelt, dass sie in Farbe und Form zu dem Installationsmaterial passen und damit ein einheitliches Installationsmaterial in einem Raum verwendet werden kann. Im Vergleich zu Feldbussystemen sind die Reaktionszeiten im EIB jedoch sehr lang. Ein Telegramm im EIB benötigt ca. 20 ms, während in Feldbussen Reaktionen bis unter 2 ms realisierbar sind. Durch die DE 43 41 099 A1 ist ein für die Gebäudesystemtechnik (EIB) vorgesehener Busankoppler bekannt geworden.

Durch die Druckschrift Burkhard Wemer "Der kleine Bruder des Interbus S" -Die Integration des Sensor-Loop-, ist ein dem Oberbegriff des Hauptanspruches entsprechender Busankoppler bekannt geworden. Bei einer solchen Ausgestaltung des Busankopplers können jedoch nur die gemäß diesem, vorrangig für Industrieanwendungen vorgesehenen Bussystem ausgeführten Anwendungsmodule angebracht werden. Das Anbringen und die Verwendung von Anwendungsmodulen der Gebäudesystemtechnik ist jedoch aus Gründen der nicht kompatiblen Anwendungsschnittstelle und der unterschiedlichen Daten- bzw. Telegrammübertragung nicht möglich.

Der vorliegenden Erfindung liegt daher die Aufgabe zugrunde, einen Busankoppler zu entwickeln, der innerhalb der Umgebung eines vorzugsweise für die Steuerung von Produktionsprozessen vorgesehenen, industriellen Feldbussystems (INTERBUS S) die problemlose Verwendung von standardmäßig für ein Bussystem der Gebäudesystemtechnik (EIB) ausgeführten Anwendungsmodule ermöglicht.

Erfindungsgemäß wird diese Aufgabe durch einen gemäß Hauptanspruch konzipierten Busankoppler gelöst. In weiteren Unteransprüchen werden Ausgestaltungen des Busankopplers angegeben. Anhand der Zeichnungsfiguren werden nachfolgend die Erfindung und dazu weitere vorteilhafte Ausgestaltungen ausführlich beschrieben und erläutert. Es zeigt:
- Fig. 1: das Blockschaltbild eines Busankopplers für Anwendungsmodule der Gebäudesystemtechnik;
- Fig. 2: ein Teil des Feldbussystems der Gebäudeleittechnik mit einem Summenrahmentelegramm;
- Fig. 3: die Zuordnung der Anwendungsmoduldaten zum Summenrahmentelegramm gemäß Fig. 2;
- Fig. 4: die Einrichtung Busankoppler montiert in einer Unterputzdose herkömmlicher Bauart.

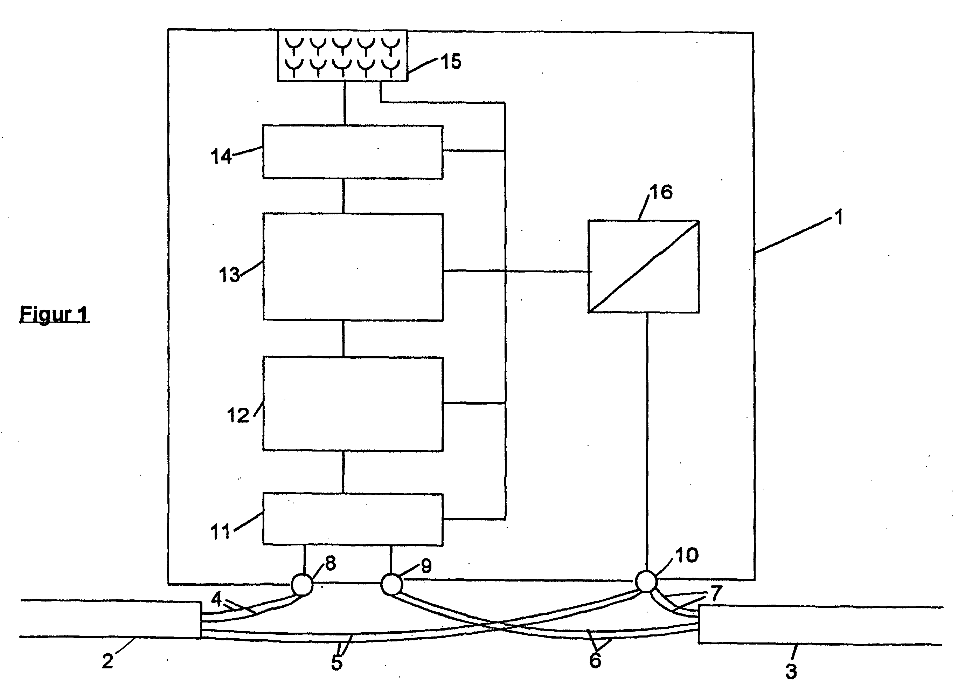

In Fig. 1 ist das Blockschaltbild eines Busankopplers 1 für Anwendungsmodule der Gebäudesystemtechnik dargestellt. Er ist an ein Feldbussystem der Gebäudeleittechnik, vorzugsweise einem der Gattung INTERBUS S, über die elektrischen Leitungen 2 und 3 angeschlossen, die jeweils über zwei Adernpaare 4 und 5 in Leitung 2 und Adernpaare 6 und 7 in Leitung 3 verfügen. Die Adernpaare 4 und 6 führen die Daten des Feldbussystems. Dabei ist das Adernpaar 4 der Leitung 2 an die Dateneingangsklemmen 8 und das Adernpaar 6 der Leitung 3 an die Datenausgangsklemmen 9 angeschlossen. Der Busankoppler 1 wird durch das Adernpaar 5 der Leitung 2 und durch das Adernpaar 7 der Leitung 3 an die Klemmen 10 der zentralen Spannungsversorgung des Bussystems angeschlossen und damit mit elektrischer Energie versorgt. Die Feldbusdaten gelangen über die Dateneingangsklemmen 8 an eine Anpassung 11, welche die elektrischen Pegel für den Ankoppelbaustein 12 bereitstellt. Dieser stellt sicher, daß die Daten vom Feldbus richtig übernommen werden und im richtigen Format gesendet werden. Der Ankoppelbaustein 12 ist vorzugsweise als ASIC (Application specific integrated circuit, - anwendungsspezifische integrierte Schaltung) ausgebildet und ist an einen Mikrocontroller 13 angeschlossen. Dieser verarbeitet die Daten, die für die an die als Steckbuchse ausgeführte Anwendungsschnittstelle 15 anschließbaren Anwendungsmodule erforderlich sind. Dazu enthält der Mikrocontroller 13 Funktionen für den Datenaustausch mit dem Ankoppelbaustein 12 und für den Austausch mit unterschiedlichen Anwendungsmodulen, die in der Gebäudesystemtechnik benutzt werden, wie z. B. Tastsensoren, Raumtemperaturregler, Chipkartenleser, Infrarot- oder Funkumsetzer, Anzeigeeinheiten und dergleichen. Diese Anwendungsmodule verwenden unterschiedliche Arten von Schnittstellen, wie Parallel-Seriell- oder Analogschnittstellen, die von dem Mikrocontroller 13 über eine elektrische Anpassung 14 unterstützt werden. Das Feldbussystem hat eine Spannungsversorgung, mit der alle benötigten Busankoppler der Kategorie 1 gespeist werden können. Ober die Spannungsversorgungsklemmen 10 wird die Spannung jedem Busankoppler zugeführt. Da die Spannung häufig 24 Volt beträgt, muß sie auf eine Höhe von 5 V gewandelt werden, da die Anpassung 11, der Ankoppelbaustein 12, der Mikrocontroller 13 und die Schnittstellenanpassung 14 nur mit dieser Spannung arbeiten können. Die als Steckbuchse ausgebildete Anwendungsschnittstelle 15 erhält ebenfalls die auf 5 V gewandelte Spannung.

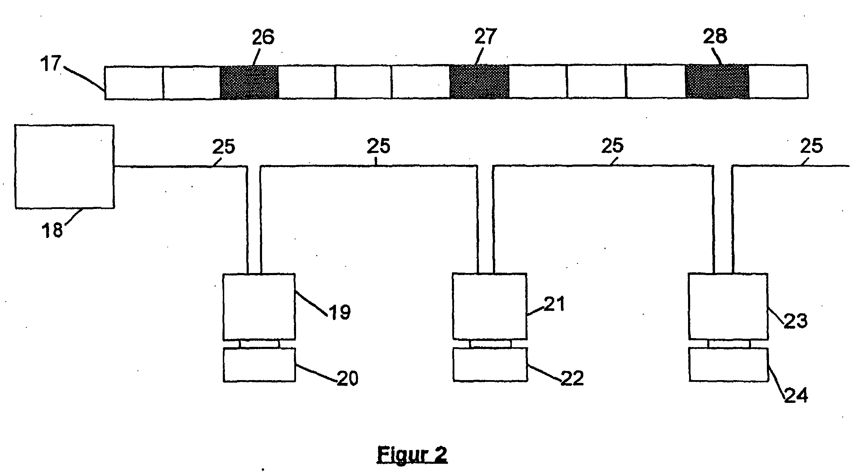

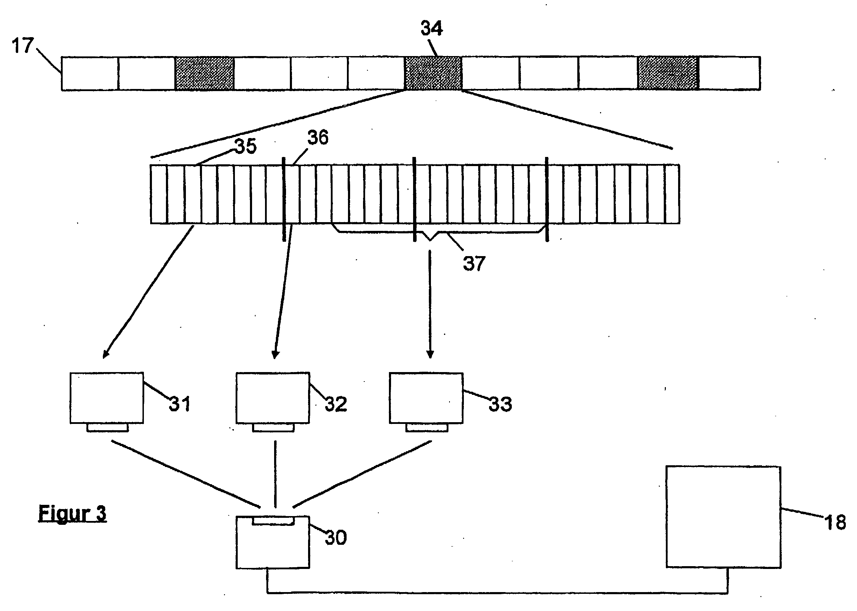

Fig. 2 zeigt ein Feldbussystem, in dem ein Summenrahmentelegramm 17 zur Datenübertragung benutzt wird. Dabei erfolgt die Steuerung des Feldbussystems durch eine Zentrale 18, die mittels der Busleitung 25 mit dem Busankoppler 19 verbunden ist, wobei dieser wiederum über die Busleitung 25 mit den Busankopplern 21 und 23 verbunden ist. Dabei ist am Busankoppler 19 ein Anwendungsmodul 20, am Busankoppler 21 ein Anwendungsmodul 22 und am Busankoppler 23 ein Anwendungsmodul 24 aufgesteckt. Auf den Busleitungen 25 wird das Summenrahmentelegramm 17 transportiert, wobei in diesem den Busankopplern 19, 21 und 23 verschiedene zeitlich versetzte Positionen zugeordnet sind, in die ihre Daten eingetragen werden. So sind die Daten des Busankopplers 19 in Position 26 eingetragen, die des Busankopplers 21 in Position 27 und die des Busankopplers 23 in Position 28 eingetragen. Für den Feldbus INTERBUS S ist die Länge der Daten in den Positionen 26, 27 und 28 gleich lang und die Datenstruktur für die Obertragungsdaten von den aufgesteckten Anwendungsmodulen 20, 22 und 24 ist so definiert, daß die Zentrale 18 die Daten verarbeiten kann. Auf die Busankoppler können unterschiedliche Arten von Anwendungsmodulen gesteckt werden. So ist z. B. in Fig. 3 eine Datenstruktur gezeigt, mit der ein Busankoppler 30 Daten der verschiedenen Arten von Anwendungsmodulen 31, 32 und 33 innerhalb der Position 34 eines Summenrahmentelegramms verarbeitet. Die Position 34 ist in 4 Byte geteilt, die aus je 8 Bit besteht. Jedem möglichen Anwendungsmodultyp ist ein Bit 35, 36 oder eine Bitfolge 37 zugeordnet. Beispielsweise stellt Bit 35 die Daten "EIN" oder "AUS" eines Tastsensors dar, Bit 36 stellt die Daten "Heizen" oder "Nicht Heizen" eines Raumtemperaturreglers dar und die Bitfolge 37 stellt die Daten "Temperatur" einer Anzeige dar. Durch diese Festlegung können die Anwendungsmodultypen 31, 32 und 33 der Gebäudesystemtechnik auch im Feldbus INTERBUS S verwendet werden.

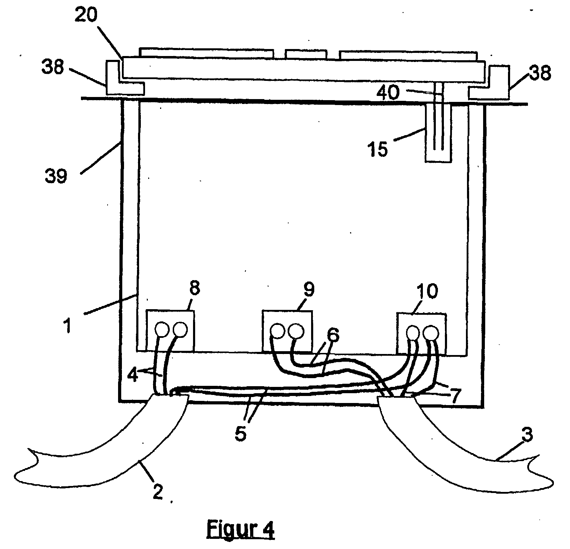

Schließlich ist in Fig. 4 noch die Einrichtung gezeigt, wonach jeder der dargestellten Busankoppler in eine herkömmliche Unterputzinstallationsdose 39 einsetzbar ist und mit einem Installationsrahmen 38 kombinierbar ist. Dabei ist der Busankoppler der Kategorie 1 über die Anwendungsschnittstelle 15 mit dem Anwendungsmodul 20 durch seine Steckerstifte 40 verbunden. Das Adernpaar 4 der Leitung 2 für die Dateneingänge 8, das Adernpaar 6 der Leitung 3 für die Datenausgänge 9 und das Adernpaar 5 von Leitung 2 und das Adernpaar 7 der Leitung 3 des Feldbussystems für die Spannungsversorgung des Busankopplers 1 sind auf seine Spannungsversorgungsklemmen 10 gelegt. Wie im Blockschaltbild gemäß Fig. 1 bereits gezeigt, sind die erforderlichen Bausteine nämlich die Anpassung 11, der Ankoppelbaustein 12, der Mikrocontroller 13, die Schnittstellenanpassung 14 sowie die Spannungswandlung 16 allesamt im Busankoppler 1 untergebracht.

### Bezugszeichentiste

- 1 -: Busankoppler
- 2 -: Leitung
- 3 -: Leitung
- 4 -: Adernpaar für Dateneingang
- 5 -: Adernpaar mit Versorgungsspannung
- 6 -: Adernpaar für Datenausgang
- 7 -: Adernpaar mit Versorgungsspannung
- 8 -: Dateneingangsklemmen
- 9 -: Datenausgangsklemmen
- 10 -: Spannungsversorgungsklemmen
- 11 -: Anpassung
- 12 -: Ankoppelbaustein
- 13 -: Mikrocontroller
- 14 -: Schnittstellenanpassung
- 15 -: Anwendungsschnittstelle, Steckbuchse
- 16 -: Spannungswandlung
- 17 -: Summenrahmentelegramm
- 18 -: Zentrale
- 19 -: Busankoppler
- 20 -: Anwendungsmodul
- 21 -: Busankoppler
- 22 -: Anwendungsmodul
- 23 -: Busankoppler
- 24 -: Anwendungsmodul
- 25 -: Busleitung
- 26 -: Position im Summenrahmentelegramm
- 27 -: Position im Summenrahmentelegramm
- 28 -: Position im Summenrahmentelegramm
- 29 -: frei
- 30 -: Busankoppler
- 31 -: Anwendungsmodul
- 32 -: Anwendungsmodul
- 33 -: Anwendungsmodul
- 34 -: Position im Summenrahmentelegramm
- 35 -: Bitstelle in der Position 34
- 36 -: Bitstelle in der Position 34
- 37 -: Bitstelle in der Position 34
- 38 -: Installationsrahmen
- 39 -: Unterputzinstallationsdose
- 40 -: Steckerstifte

## Patentansprüche

1. Busankoppler (19, 21, 23 und 30) mit einer Anwendungsschnittstelle (15), an die unterschiedliche Typen von Anwendungsmodulen (20, 22, 24, 31, 32 und 33) anbringbar sind, wobei der Busankoppler über Dateneingangsklemmen (8) sowie Datenausgangsklemmen (9) an ein Bussystem und über Spannungsversorgungsklemmen (10) an eine Spannungsversorgung anschließbar ist, wobei zur Aufbereitung der Daten zwischen dem zugeordneten Anwendungsmodul (20, 22, 24, 31, 32 und 33) und dem Bussystem ein Mikrocontroller (13) vorgesehen ist, **dadurch gekennzeichnet, dass** die Anwendungsschnittstelle (15) gemäß den Spezifikationen des European Installation Bus EIB als Steckbuchse ausgeführt ist und dass zur Aufbereitung der Datenübertragung die Anwendungsschnittstelle (15) über eine Schnittstellenanpassung (14), über den Mikrocontroller (13), über einen Ankoppelbaustein (12) und über eine Pegelanpassung (11) an das Bussystem angeschlossen ist, wobei das Bussystem gemäß den Spezifikationen des Feldbussystems INTERBUS S ausgestaltet ist.

2. Busankoppler (19, 21, 23 und 30) nach Anspruch 1, **dadurch gekennzeichnet, dass** zur Bereitstellung einer Versorgungsspannung zwischen den Spannungsversorgungsklemmen (10) einerseits und der Pegelanpassung (11), dem Ankoppelbaustein (12), dem Mikrocontroller (13), der Schnittstellenanpassung (14) und der Anwendungsschnittstelle andererseits eine Spannungswandlung (16) vorgesehen ist.

3. Busankoppler (19, 21, 23 und 30) nach Anspruch 1 oder 2, **dadurch gekennzeichnet, dass** der Ankoppelbaustein (12) Mittel aufweist, um die Daten des zugeordneten Anwendungsmoduls (20, 22, 24, 31, 32 und 33) in ein Summenrahmentelegramm des Bussystems einzutragen.

4. Busankoppler (19, 21, 23 und 30) nach einem der Ansprüche 1 bis 3, **dadurch gekennzeichnet, dass** dieser mit zumindest einem weiteren Busankoppler (19, 21, 23 und 30) über die Busleitung (25) mit einer Zentrale (18) in Verbindung stehen.

5. Busankoppler (19, 21, 23 und 30) nach einem der Ansprüche 1 bis 4, **dadurch gekennzeichnet, dass** dieser in eine Unterputzinstallationsdose (39) montierbar und mit einem Instalfationsrahmen (38) kombinierbar sind.

## Claims

1. Bus coupling unit (19, 21, 23 and 30) with an application interface (15) to which the various types of application modules (20, 22, 24, 31, 32 and 33) can be attached, with the bus coupling unit capable of being connected to a bus system by means of data input terminals (8) and data output terminals (9) and to a voltage supply by means of voltage supply terminals (10), with a microcontroller (13) provided for conditioning the data between the assigned application module (20, 22, 24, 31, 32 and 33) and the bus system, **characterized by** the fact that the application interface (15) is executed as a socket contact conform to the specifications of the European Installation Bus (EIB) and that the application interface (15) is connected to the bus system by means of an interface adaptor (14), by means of the microcontroller (13), by means of a coupling module (12) and by means of a level adapter (11) for the purpose of conditioning the data transmission, with the bus system designed in compliance with the specifications of the INTERBUS S field bus system.

2. Bus coupling unit (19, 20, 23 and 30) according to Claim 1, **characterized by** the fact that a voltage converter (16) is provided between the voltage supply terminals (10) on the one hand and the level adapter (11), the coupling module (12), the microcontroller (13), the interface adapter (14), and the application interface on the other hand for the purpose of providing a supply voltage.

3. Bus coupling unit (19, 20, 21 and 30) according to Claim 1 or 2, **characterized by the fact** that the coupling module (12) features the means for entering the data of the assigned application module (20, 22, 24, 31, 32 and 33) in a summation frame telegram of the bus system.

4. Bus coupling unit (19, 20, 23 and 30) according to any of Claims 1 to 3, **characterized by** the fact that the same together with at least one further bus coupling unit (19, 21, 23 and 30) are connected to a central control unit (18) by means of the bus line (25).

5. Bus coupling unit (19, 21, 23 and 30) according to any of Claims 1 to 4, **characterized by the fact** that the same can be mounted in a flush-type installation box (39) and combined with an installation frame (38).

## Revendications

1. Coupleur de bus (19, 21, 23 et 30) comportant une interface d'application (15) à laquelle on peut monter différents types de modules d'application (20, 22, 24, 31, 32 et 33), le coupleur de bus pouvant être connecté via des bornes d'entrée de données (8) ainsi que via des bornes de sortie de données (9) à un système de bus, et via des bornes d'alimentation en courant (10) à une alimentation en courant, et pour gérer les données entre le module d'application (20, 22, 24, 31, 32 et 33) associé et le système de bus est prévu un microcontrôleur (13), **caractérisé en ce que** l'interface d'application (15) est réalisée sous forme de fiche femelle, selon les spécifications du "European Installation Bus EIB", et **en ce que** pour gérer la transmission des données, l'interface d'application (15) est branchée au système de bus via un circuit adaptateur (14), via le microcontrôleur (13), via un composant de couplage (12) et via un adaptateur de niveau (11), le système de bus étant réalisé selon les spécifications du système de bus de champ "INTERBUS S".

2. Coupleur de bus (19, 21, 23 et 30) selon la revendication 1, **caractérisé en ce qu'**il est prévu un convertisseur de courant (16) pour fournir un courant d'alimentation entre les bornes d'alimentation en courant (10) d'une part et l'adaptateur de niveau (11), le composant de couplage (12), le microcontrôleur (13), le circuit adaptateur (14) et l'interface d'application, d'autre part.

3. Coupleur de bus (19, 21, 23 et 30) selon l'une ou l'autre des revendications 1 et 2, **caractérisé en ce que** le composant de couplage (12) présente dés moyens pour inscrire, dans un télégramme de cadre de somme du système de bus, les données du module d'application (20, 22, 24, 31, 32 et 33) associé.

4. Coupleur de bus (19, 21, 23 et 30) selon l'une des revendications 1 à 3, **caractérisé en ce que** celui-ci, avec au moins un autre coupleur de bus (19, 21, 23 et 30), est relié à une centrale (18) via la ligne de bus (25).

5. Coupleur de bus (19, 21, 23 et 30) selon l'une des revendications 1 à 4, **caractérisé en ce que** celui-ci peut être monté dans une prise d'installation encastrée (39) et peut être combiné à un cadre d'installation (38).
